# EUROPEAN PATENT SPECIFICATION

(11) **EP 3 458 291 B1**
(45) Date of publication and mention of the grant of the patent: **01.04.2020**
(21) Application number: 17730155.3
(22) Date of filing: 14.06.2017
(51) Int. Cl.: B60G 21/055, F16F 1/38, F16B 2/00, F16B 9/02

(54) **ELASTOMERIC SPRING FOR AN ANTI-ROLL BAR, SUPPORT ARMATURE FOR AN ANTI-ROLL BAR, ANTI-ROLL BAR SUPPORT AND PREPARATION PROCESS FOR AN ANTI-ROLL BAR**
ELASTOMERFEDER FÜR EINEN STABILISATOR, STÜTZANKER FÜR EINEN STABILISATOR, STABILISATORSTÜTZE UND VERFAHREN ZUR HERSTELLUNG EINES STABILISATORS
RESSORT ÉLASTOMÈRE POUR UNE BARRE ANTI-ROULIS, ARMATURE DE SUPPORT POUR UNE BARRE ANTI-ROULIS, SUPPORT DE BARRE ANTI-ROULIS ET PROCÉDÉ DE PRÉPARATION POUR UNE BARRE ANTI-ROULIS

(30) Priority: 14.06.2016 FR 1655484
(43) Date of publication of application: 27.03.2019
(73) Proprietor: Vibracoustic Nantes SAS, 44474 Carquefou (FR)
(72) Inventor: KIEFFER, Jérôme, 44300 Nantes (FR); POINDESSAULT, Gerard, 44710 Saint léger les vignes (FR)
(74) Representative: Flügel Preissner Schober Seidel
(86) International application number: PCT/EP2017/064588
(87) International publication number: WO 2017/216247

(56) References cited:
- EP-A1- 2 415 622
- WO-A1-2010/149756
- DE-A1-102004 056 884
- DE-A1-102014 217 839
- DE-U1-202016 100 149
- FR-A1- 2 806 035
- US-A- 5 112 031

## Description

### FIELD OF THE INVENTION

The invention relates to an elastomeric spring (or damper) for an anti-roll bar, an anti-roll bar support armature, an anti-roll bar support, an anti-roll bar equipped with such a support, as well as an anti-roll bar preparation process.

In a general manner, in the present presentation, and unless otherwise stated, to be understood by "elastomeric spring", "armature", "support" and "bar" are "elastomeric spring for anti-roll bar", "anti-roll bar support armature", "anti-roll bar support" and "anti-roll bar" respectively.

### PRIOR ART

For the preparation of the known anti-roll bars, first of all the elastomeric spring is arranged around the bar, the elastomeric spring is bonded to the bar, then the antiroll bar support armature is mounted around the elastomeric spring by forcing in the elastomeric spring. However, these different preparation steps are complex, tedious and time-consuming while the general structure of the support remains complex. There is therefore a need in that sense.

The document DE202016100149U1 discloses an elastomeric spring for anti-roll bar comprising at least one first part made of elastomer and one second part made of elastomer distinct from the first part and also an anti-roll bar support armature comprising a first element and a second element distinct from the first element, the first element and the second element being configured to be assembled together.

### INVENTION PRESENTATION

The present presentation refers to an elastomeric spring (or damper) for an anti-roll bar.

One embodiment relates to an elastomeric spring (or damper) for an anti-roll bar comprising at least one first part made of elastomer and a second part made of elastomer distinct from the first part, the first part and the second part each comprising at least one latching portion configured to work together by latching to an anti-roll bar support armature.

Latching (or snapping-in) is a method of assembling two parts by engagement and elastic deformation (generally local deformation of only one part of a part, for example of a tongue, or of a peripheral element of said part, or also by deformation of the whole of the parts involved in assembly). When the two parts have been engaged in the latching position, the pieces have generally regained their initial shape and no longer show any elastic deformation (or show less elastic deformation). When the two pieces are engaged one with the other in the latching position, they work together with each other in a manner to oppose, indeed to block the relative movements of said parts in the direction of disengagement (the opposite direction to the engagement direction). In the latching position, the two parts can additionally work together in a manner to oppose, indeed to block their relative movements in the direction of the extension of the engagement, beyond the latching position. Assembly by latching provides the advantage of being easy to implement and reliable.

For example, the latching parts comprise a retention shoulder configured for working together as a stop against another complementary shoulder of an anti-roll bar support armature.

Thanks to such latching parts, the elastomeric spring can easily be connected to an anti-roll bar support armature, which makes easier the operations of the assembly of the support and antiroll bar preparation.

In certain embodiments, the first part and the second part each show an internal stiffening reinforcement.

For example, the reinforcements comprise a sheet (or lamination) of a material stiffer than the parts. For example, the reinforcements are immersed in the mass made of elastomer of the first part and of the second part, respectively. Such a configuration makes it possible to simplify the structure of the elastomeric spring, and consequently of the antiroll bar support equipped with such an elastomeric spring. This likewise makes it possible to simplify the assembly of the antiroll bar support, as well as preparation of the anti-roll bar.

In certain embodiments, the first part and the second part are interconnected by at least one divisible linkage.

It is understood that the divisible linkage forms a bridge between the first and the second parts, and is configured to be broken manually. So, this divisible linkage makes it possible to keep the first part and the second part in one single assembly. Such a unit forms an intermediate product, easy to handle and to implement. This makes it possible to simplify assembly of the anti-roll bar support, as well as preparation of the anti-roll bar.

In certain embodiments, the first part and the second part each show a wall extending in an axial direction and with a semi-circular cross-section, said wall being configured to work together with an antiroll bar.

It is understood that an anti-roll bar shows a circular cross-section, and that each part partly receives the anti-roll bar at right angles to its axis.

The present presentation likewise relates to an anti-roll bar support armature.

One embodiment relates to an antiroll bar support armature comprising a first element and a second element distinct from the first element, the first element and the second element being configured to be assembled together, the first element and the second element each comprising at least one latching portion configured to work together by latching with an elastomeric spring for an anti-roll bar.

It is understood on the one hand that each element is configured to be assembled by latching together with one portion of an elastomeric spring for an anti-roll bar, and on the other hand that these elements are configured to be assembled together. For example, the first element is configured for being assembled with the first part of the elastomeric spring described above, while the second element is configured to be connected to the second part. For example, each latching portion comprises a shoulder forming a hook configured to work together as a stop with a complementary shoulder of the elastomeric spring.

Thanks to these latching portions, it is easy to connect the anti-roll bar support armature to an antiroll bar elastomeric spring, which makes the operation of the mounting of the support and preparation of the anti-roll bar easier.

In certain embodiments, the first element and the second element are configured to be assembled by latching.

Such assembling by latching of the two elements makes it possible to make easier the operations of assembly of the anti-roll bar support and of the preparation of the anti-roll bar.

In certain embodiments, the first element forms a base configured to be attached to a vehicle chassis or equivalent.

Understood by "chassis or equivalent" is of course a vehicle chassis, but equally a vehicle body or more generally any frame suitable for carrying an anti-roll bar and absorbing the mechanical loads borne by the anti-roll bar.

In certain embodiments, the first element shows at least one fastening hole, the second element showing at least one part forming a centralizer to be engaged in the at least one hole.

Such a part forming a centralizer makes it possible to make assembly of the elements easier during assembly of the support.

In certain embodiments, the first element and the second element are interconnected by at least one divisible linkage.

It is understood that the divisible linkage forms a bridge between the first element and the second element, and is configured to be broken manually. Hence this divisible linkage makes it possible to keep the first element and the second element in one single assembly. Such an assembly forms an intermediate product, easy to handle and to implement. This makes it possible to simplify assembly of the anti-roll bar support, as well as preparation of the anti-roll bar.

In certain embodiments, the first element and the second element are made of polymeric material.

For example, the polymeric material is a thermoplastic. For example, the polymeric material comprises one or more of the compounds from among acrylonitrile butadiene styrene (also known by the acronym ABS), acrylonitrile methyl methacrylate (also known by the acronym AMMA), acrylonitrile styrene acrylate (also known by the acronym ASA), cellulose acetate (also known by the acronym CA), cellulose acetobutyrate (also known by the acronym CAB), cellulose acetopropionate (also known by the acronym CAP), expanded polystyrene (also known by the acronym EPS), ethylene tetrafluoroethylene (also known by the acronym ETFE), ethylene vinyl alcohol (also known by the acronym EVAL or EVOH), fluorinated ethylene propylene (also known by the acronym FEP or PFEP), methyl methacrylate butadiene styrene (also known by the acronym MBS), methyl cellulose (also known by the acronym MC), polyamide (also known by the acronym PA), polycaprolactam (also known by the acronym PA6), polyamide imide (also known by the acronym PAI), polyacrylonitrile (also known by the acronym PAN), polybutene-1 (also known by the acronym PB-1), polybutylene terephthalate (also known by the acronym PBT), polycarbonate (also known by the acronym PC), polychlorotrifluoroethylene (also known by the acronym PCTFE), polyethylene (also known by the acronym PE), high-density polyethylene (also known by the acronym PE-HD), low-density polyethylene (also known by the acronym PE-LD), linear low-density polyethylene (also known by the acronym PE-LLD), ultra-high molecular weight polyethylene (also known by the acronym PE-UHMW), polyether-amide block copolymer (also known by the acronym PEBA), polyester carbonate (also known by the acronym PEC), polyether ether ketone (also known by the acronym PEEK), polyether imide (also known by the acronym PEI), polyether ketone (also known by the acronym PEK), polyethylene naphthalate (also known by the acronym PEN), polyether sulfone (also known by the acronym PESU), polyethylene terephthalate) (also known by the acronym PET), perfluoroalkoxy (also known by the acronym PFA), polyketone (also known by the acronym PK), polymethyl methacrylate (also known by the acronym PMMA), polymethylpentene (also known by the acronym PMP), polyoxymethylene or polyacetal or polyformaldehyde (also known by the acronym POM), polypropylene or polypropene (also known by the acronym PP), polyphenylene ether (also known by the acronym PPE), polyphenylene oxide (also known by the acronym PPO), polypropylene oxide (also known by the acronym PPOX), polyphenylene sulphide (also known by the acronym PPS), polystyrene (also known by the acronym PS), polysulfone (also known by the acronym PSU), polytetrafluoroethylene (also known by the acronym PTFE), polyurethane (also known by the acronym PU), polyvinyl acetate (also known by the acronym PVAC), polyvinyl alcohol (also known by the acronym PVAL), polyvinyl chloride (also known by the acronym PVC), polyvinylidene fluoride (also known by the acronym PVDF), polyvinyl fluoride (also known by the acronym PVF), styrene acrylonitrile (also known by the acronym SAN), silicone (also known by the acronym SI), styrene maleic anhydride (also known by the acronym SSMA or SMAnh), polyolefine, polyester. More generally, the polymeric material is, for example, a synthetic organic polymeric material or a synthetic organic polymer. Such materials are particularly well suited to production of parts on an industrial scale.

In addition, the fact that the first element and the second element are made of polymeric material makes it possible, when the armature is equipped with an elastomeric spring and forms an anti-roll bar support, and that support is arranged around the bar, to subject the assembly to an electromagnetic field and to only bond (i.e. glue) the anti-roll bar (the only metal element) to the parts in contact with it, namely the elastomeric spring, by induction. Hence, the armature is not sensitive to the electromagnetic field, which makes it possible to aim bonding at specific parts while subjecting the assembly to an electromagnetic field, which makes the adhesion operation easier, thanks to which the anti-roll bar preparation time is optimized and shortened. So this ensures simplification of the assembly of the support and preparation of the antiroll bar.

The present presentation likewise relates to an assembly comprising an elastomeric spring for an antiroll bar and an anti-roll bar support armature.

One embodiment relates to an assembly comprising an antiroll bar elastomeric spring according to any one of the embodiments described in the present presentation and an anti-roll bar support armature according to any one of the embodiments described in the present presentation.

It is understood that such an assembly forms an antiroll bar support that is not assembled. In other words, the assembly forms a kit for manufacturing an anti-roll bar support. Such an assembly is particularly easy to implement and greatly facilitates the operations of anti-roll bar support assembly and antiroll bar preparation, particularly thanks to the latching portions of the elastomeric spring parts and of the elements of the armature.

In certain embodiments, the first part is assembled by latching to the first element while the second part is assembled by latching to the second element.

Hence, within the assembly, the elastomeric spring is pre-attached to the armature by latching, thanks to which the operations of assembly of the anti-roll bar support and preparation of the anti-roll bar are made all the easier.

The present presentation likewise relates to an anti-roll bar support.

One embodiment relates to an anti-roll bar support comprising an elastomeric spring according to any one of the embodiments described in the present presentation and an armature according to any one of the embodiments described in the present presentation, in which the first part is attached by latching to the first element while the second part is attached by latching to the second element, the first element being attached to the second element.

The present presentation likewise relates to an anti-roll bar equipped with an anti-roll bar support according to any one of the embodiments described in the present presentation.

Finally, the present presentation relates to a preparation process for an anti-roll bar.

One embodiment relates to a preparation process for an anti-roll bar comprising the stages of:
- supplying an anti-roll bar,
- supplying an assembly according to any one of the embodiments in the present presentation,
- arranging the first part and the second part around the anti-roll bar and attaching the first element to the second element, and
- bonding (i.e. sticking) the first part and the second part to the anti-roll bar.

For example, in order to make preparation even easier, the first element and the second element of the armature are mounted on the first part and the second part of the elastomeric spring respectively before arranging the first and second parts around the bar.

It is understood that the adhesion of the first and second parts to the antiroll bar can be achieved in various ways using various techniques. For example, the anti-roll bar can simply be heated up. According to another example, the anti-roll bar is heated inductively by subjecting the assembly to an electromagnetic field.

In certain embodiments, the armature comprises at least one divisible linkage, and the at least one divisible linkage is broken before attaching the first element to the second element.

In certain embodiments, the elastomeric spring comprises at least one divisible linkage, and the at least one divisible linkage is broken before arranging the first and second parts around the anti-roll bar.

Of course, the elastomeric spring only can show a divisible linkage, the armature only can show a divisible linkage, or the elastomeric spring and the armature each show a divisible linkage. For example, in the latter case, the divisible linkage of the elastomeric spring can be configured to be able to latch the first part and the second part to the first element and the second element respectively without being broken. The operator who mounts the support on the anti-roll bar then simultaneously breaks the divisible linkage of the elastomeric spring and the divisible linkage of the armature when he arranges to first and second parts around the anti-roll bar.

In certain embodiments, an adhesive is applied to the anti-roll bar before the first and second parts are arranged around the antiroll bar.

An adhesive is a substance that promotes adhesion between the elastomeric spring and the anti-roll bar, before, during and/or after the adhesion operation. Of course, it is understood that the adhesive is applied to the bar where the first and second parts work together with the bar.

### BRIEF DESCRIPTION OF THE DRAWINGS

The invention and its advantages will be better understood after the reading of the detailed description below of different embodiments of the invention given as examples without limitation. This description refers to the pages of annexed figures, on which:
- Fig. 1 shows an assembly comprising an anti-roll bar support armature and an elastomeric spring for an anti-roll bar,
- Fig. 2 shows the assembly of Fig. 1 where the parts of the elastomeric spring are attached to the armature elements,
- Fig. 3 shows the armature seen according to the arrow III of Fig. 1,
- Fig. 4 shows an anti-roll bar preparation step, and
- Fig. 5 shows an anti-roll bar equipped with a support.

### DETAILED DESCRIPTION OF EMBODIMENTS

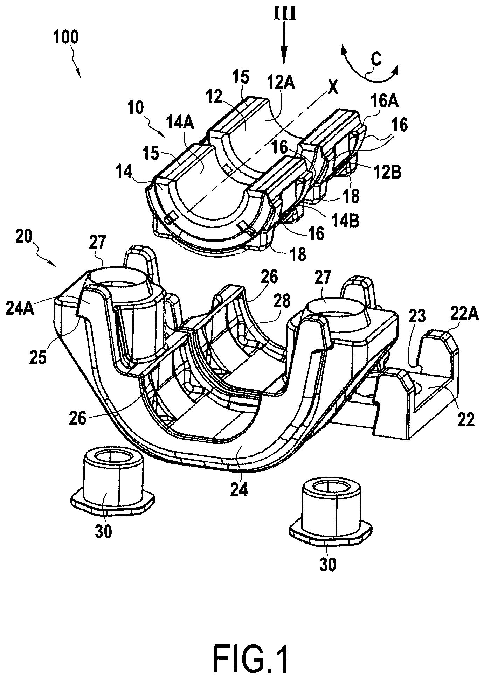

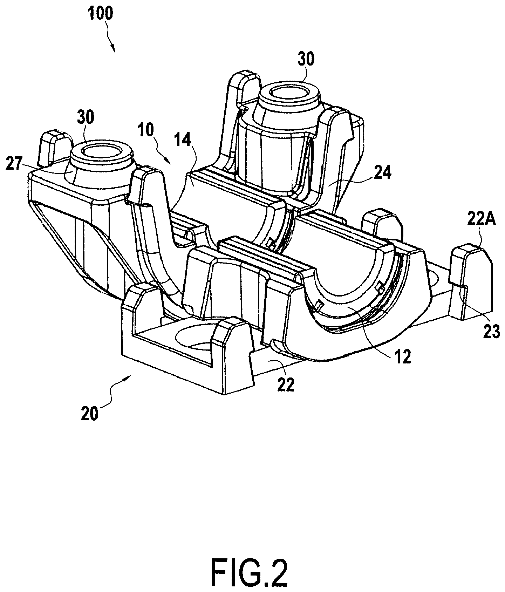

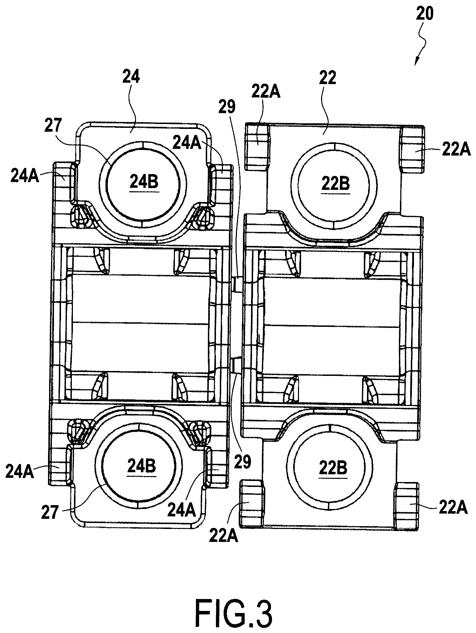

Figures 1 and 2 show an assembly 100 (or kit for manufacturing an antiroll bar support 50) comprising an elastomeric spring for the anti-roll bar 10 and an anti-roll bar support armature 20. In Fig. 1, the elastomeric spring 10 is not attached to the armature 20, while in Fig. 2 the elastomeric spring is attached to the armature 20. In Figures 1 and 2, the two elements of the armature are not assembled. Figure 3 shows armature 20 according to the arrow III of Fig. 1.

The elastomeric spring 10 comprises a first part made of elastomer 12 and a second part made of elastomer 14. In this example, the first part 12 and the second part 14 are identical. Each part 12, 14 shows the general shape of a hollow annular half-cylinder of the X axis. It is noted that each part 12 and 14 shows an internal stiffening (or lamination) reinforcement 15 which, in this example, is a sheet of polymeric material shaped as a hollow annular half cylinder immersed in the mass made of elastomer of each of the parts 12 and 14. In this example, the reinforcement 15 is made of polymeric material so that it does not react to the electromagnetic field to which the assembly is subjected during the bonding of the elastomeric spring to the anti-roll bar. Of course, according to one variant, this reinforcement can be made of metal, for example if adhesion is not achieved via an electromagnetic field, or if, on the contrary, it is desired that this reinforcement reacts to the electromagnetic field (or again if this reaction is without incidence). Each part 12, 14 shows an internal wall 12A, 14A extending in the axial direction X and of semi-circular cross-section (i.e. section perpendicular to the X axis), said wall 12A, 14A being configured to operate together with an anti-roll bar. The exterior wall 12B, 14B of the parts 12, 14 is equipped with latching portions 16. In this example, each part 12, 14 is equipped with four latching portions 16 arranged respectively at the two axial ends on either side of the X axis. Each latching portion 16 comprises a projection forming a shoulder 16A. The parts 12 and 14 being made of elastomer, latching is achieved in this example by elastic deformation of the latching portions 16.

In this example, the exterior walls 12B and 14B of parts 12 and 14 likewise show stops 18 for blocking parts 12 and 14 rotating around the X axis within armature 20. In this example, each part 12 and 14 is equipped with four stops 18 arranged at the axial ends of each part, between the latching portions 16 in the circumferential direction C of parts 12 and 14.

Armature 20 shows a first element 22 and a second element 24. The first element 22 forms a base configured to be fastened onto a vehicle chassis or equivalent while the second element 24 shows a general arch shape. Each element 22 and 24 shows a latching portion 26 configured for working together by latching with the portions 16 of the parts 12 and 14 of the elastomeric spring 10. Otherwise, each element 22 and 24 shows cavities 28 configured to receive and to work together as a stop with the stops 18 of the parts 12 and 14 of the elastomeric spring 10.

In this example, seen from arrow III (see Fig. 3), the first element 22 has a general rectangular shape and shows, in each corner of the rectangle, a latching portion 22A. Each latching portion 22A shows a hook forming a latching shoulder 23. The second element 24 shows four latching portions 24A configured to work together with the latching portions 22A of the first element 22. The latching portions 24A each show a hook forming shoulder 25. Elements 22 and 24 are of polymeric material, and show an overall flexibility sufficient for each element to be deformed in its entirety in such a way as to make possible the latching of the portions 22A to the portions 24A. It is noted that the latching portions 22A of the first element 22 are arranged on the outer side relative to the latching portions 24A of the second element 24. This makes it possible to block "opening" deformations of the arch formed by the second element 24 towards outside at the time of the mounting of the support with an antiroll bar, deformations due to strains generated during the compression of the elastomeric spring against the antiroll bar.

The first element 22 shows fastening holes 22B for fastening to a vehicle chassis or equivalent (not shown). The second element 24 likewise shows fastening holes 24A arranged opposite the fastening holes 22B of the first element when the support 50 is assembled. Hence the two elements of the armature are engaged in the fastening (for example a screw or a bolt - not shown) of support 50 to the chassis, which improves the reliability of the armature 20, and hence of support 50. Holes 22B of the second element 22 are each delimited by a skirt 27 extending along the axis of each of the holes 22B. This skirt 27 shows an exterior truncated wall and forms a centralizer for centring the second element 24 in relation to the first element 22 during the assembly of support 50. Hence, the skirt 27 engages in hole 22B of the first element 22.

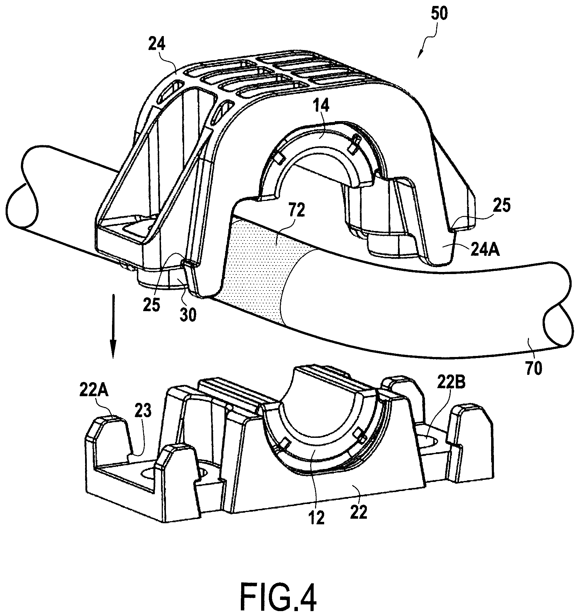

As can be seen in Fig. 3, two divisible linkages 29 connect the first element 22 to the second element 24. Of course, during the assembly of support 50 (see Fig. 4), these divisible linkages 29 are broken.

Although it cannot be seen, the divisible linkages 29 between the first and second elements 22 and 24 of the armature 20 are not broken in Figures 1 and 2. Hence, in Fig. 2, the assembly 100 forms one single entity easy to handle and transportable. This makes it easier, in particular, to make anti-roll bar preparation shops available, as well as making preparation itself easier.

In this example, the assembly likewise comprises two tubular reinforcements 30 configured to be fitted into the fastening holes 24B and 22B of the elements 24 and 22. These reinforcements 30 permit better distribution of the stresses of the fastening of armature 20 (and therefore of the support 50), thanks to which the mechanical behaviour is improved. In Fig. 3, the reinforcements 30 are fitted into the holes 24B of the second element 24.

Fig. 4 shows a step in the assembly of the antiroll bar support 50, manufactured from the assembly 100 described with reference to Figures 1 and 2, as well as the preparation of an anti-roll bar 70. It is noted that in a general way the manufacturing (or the assembling) of the support 50 comprises mainly the steps in assembly by latching of the parts of the elastomeric spring 10 to the elements of armature 20, then the assembling of the elements of the armature 20 between them.

In Fig. 4, the first part 12 of the elastomeric spring 10 is assembled by latching to the first element 22 of armature 20 while the second part 14 of the elastomeric spring 10 is attached to the second element 24 of armature 20. The second element 24 makes its approach to the first element 22 in the direction of arrow F of Fig. 4, in such a manner as to attach the second element 24 to the first element 22 by latching. Of course, in this example the first part 12 being identical to the second part 14, it is possible to mount the second part 14 with the first element 22 and the first part 12 with the second element 24. This makes operations of mounting and preparation of the anti-roll bar even easier.

Obviously, in Fig. 4, the divisible linkages 29 between the first and second elements 22 and 24 of armature 20 are broken.

In Fig. 4, during the assembly of support 50, an antiroll bar 70 is arranged between the two elements 22 and 24. Hence the parts 12 and 14 of the elastomeric spring 10 being rigidly locked with the elements 22 and 24 of armature 20, assembling support 50 the first part 12 and the second part 14 are arranged around the anti-roll bar 70 at the same time as the first element 22 is attached to the second element 24.

In this example, the antiroll bar 70 has, as a preliminary, been provided with an adhesive coating 72. In this example, the coating 72 extends only over the portion of the bar 70 which works together with the elastomeric spring 10, and more particularly with the internal walls 12A and 14A of the first and second parts 12 and 14.

At the end of this assembling work, the bar 70 is heated by induction to bond the elastomeric spring 10 to the bar 70 (step not shown).

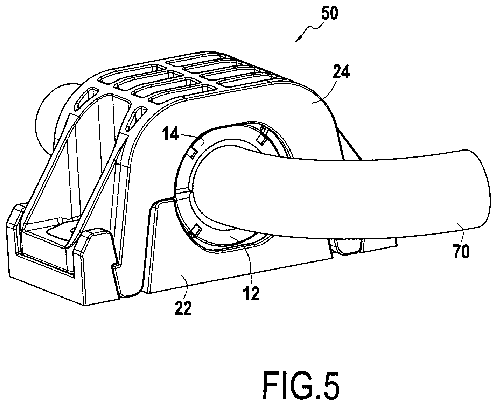

Fig. 5 shows the prepared anti-roll bar 70, the support 50 being mounted on the bar 70 and the elastomeric spring 10 stuck to the bar 70.

Although the present invention has been described with reference to specific embodiments, it is obvious that modifications and changes can be made to these embodiments without departing from the general scope of the invention such as defined by the claims. In particular, individual characteristics of the different embodiments illustrated/mentioned can be combined in the additional embodiments. Consequently, the description and the drawings must be considered in an illustrative rather than a restrictive sense.

It is likewise obvious that all the characteristics described with reference to a process are transferrable, alone or in combination, to a device, and inversely, all the characteristics described with reference to a device are transferrable, alone or in combination, to a process.

## Claims

1. Elastomeric spring (10) for antiroll bar comprising at least one first part (12) made of elastomer and one second part (14) made of elastomer distinct from the first part (12), **characterized by** the first part (12) and the second part (14) each comprising at least one latching portion (16) configured to work together by latching with an anti-roll bar support armature (20).

2. Elastomeric spring (10) according to claim 1, in which the first part (12) and the second part (14) each show an internal stiffening reinforcement (15).

3. Elastomeric spring (10) according to claim 1 or 2, in which the first part (12) and the second part (14) are inter-connected by at least one divisible linkage.

4. Anti-roll bar support armature (20) comprising a first element (22) and a second element (24) distinct from the first element (22), the first element (22) and the second element (24) being configured to be assembled together, **characterized by** the first element (22) and the second element (24) each comprising at least one latching portion (26) configured to work together by latching with an elastomeric spring (10) for an anti-roll bar.

5. Armature (20) according to claim 4, in which the first element (22) and the second element (24) are configured to be assembled by latching.

6. Armature (20) according to claim 4 or 5, in which the first element (22) forms a base configured to be attached to a vehicle chassis or equivalent.

7. Armature (20) according to claim 6, in which the first element (22) shows at least one fastening hole (22B), the second element (24) showing at least one portion forming a centralizer (27) configured to be engaged in the at least one hole (22B).

8. Armature (20) according to any one of the claims 4 a 7, in which the first element (22) and the second element (24) are interconnected by at least one divisible linkage (29).

9. Assembly (100) comprising an elastomeric spring (10) of an anti-roll bar according to any one of the claims 1 to 3, and a support armature (20) of an anti-roll bar according to any one of the claims 4 to 8.

10. Assembly (100) according to claim 9, in which the first part (12) is assembled by latching to the first element (22) while the second part (14) is assembled by latching together with the second element (24).

11. Antiroll bar support (50) comprising an elastomeric spring (10) according to any one of the claims 1 to 3 and an armature (20) according to any one of the claims 4 to 8, in which the first part (12) is attached by latching to the first element (22) while the second part (14) is attached by latching to the second element (24), the first element (22) being attached to the second element (24).

12. Anti-roll bar (70) equipped with a support (50) according to claim 11.

13. Anti-roll bar preparation process comprising the steps of:
- supplying an anti-roll bar (70),
- supplying an assembly (100) according to claim 9 or 10,
- arranging the first part (12) and the second part (14) around the anti-roll bar (70) and attaching the first element (22) to the second element (24), and
- bonding the first part (12) and the second part (14) to the anti-roll bar (70).

14. Preparation process for an anti-roll bar according to claim 13, in which the assembly comprises an armature (20) according to claim 8, in which the at least one divisible linkage (29) is broken before attaching the first element (22) to the second element (24).

15. Preparation process for an anti-roll bar according to claim 13 or 14, in which an adhesive (72) is applied to the anti-roll bar (70) before the first part (12) and the second part (14) are arranged around the anti-roll bar (70).

## Patentansprüche

1. Elastomerfeder (10) für einen Stabilisator, umfassend mindestens ein erstes Teil (12) aus einem Elastomer und ein zweites Teil (14) aus einem von dem ersten Teil (12) verschiedenen Elastomer, **dadurch gekennzeichnet, dass** das erste Teil (12) und das zweite Teil (14) jeweils mindestens einen Verriegelungsabschnitt (16) aufweisen, der so ausgestaltet ist, dass er durch Einrasten mit einem Stabilisator- Stützanker (20) zusammenwirkt.

2. Elastomerfeder (10) nach Anspruch 1, bei der das erste Teil (12) und das zweite Teil (14) jeweils eine innere Versteifungsverstärkung (15) aufweisen.

3. Elastomerfeder (10) nach Anspruch 1 oder 2, bei der das erste Teil (12) und das zweite Teil (14) durch mindestens ein teilbares Gestänge miteinander verbunden sind.

4. Stabilisator-Stützanker (20), umfassend ein erstes Element (22) und ein zweites Element (24), das sich von dem ersten Element (22) unterscheidet, wobei das erste Element (22) und das zweite Element (24) so ausgestaltet sind, dass sie zusammengebaut werden können, **dadurch gekennzeichnet, dass** das erste Element (22) und das zweite Element (24) jeweils mindestens einen Verriegelungsabschnitt (26) umfassen, der so ausgestaltet ist, dass er durch Einrasten mit einer Elastomerfeder (10) für einen Stabilisator zusammenwirkt.

5. Armatur (20) nach Anspruch 4, bei der das erste Element (22) und das zweite Element (24) für den Zusammenbau durch Einrasten ausgelegt sind.

6. Armatur (20) nach Anspruch 4 oder 5, bei der das erste Element (22) eine Basis bildet, die ausgelegt ist, um an einem Fahrzeugrahmen oder einem gleichwertigen Element befestigt zu werden.

7. Armatur (20) nach Anspruch 6, bei der das erste Element (22) mindestens eine Befestigungsöffnung (22B) aufweist, wobei das zweite Element (24) mindestens einen Abschnitt aufweist, der einen Zentrierer (27) bildet, welcher ausgelegt ist, um in die mindestens eine Öffnung (22B) einzugreifen.

8. Armatur (20) nach einem der Ansprüche 4 bis 7, bei der das erste Element (22) und das zweite Element (24) durch mindestens ein teilbares Gestänge (29) miteinander verbunden sind.

9. Baugruppe (100), umfassend eine Elastomerfeder (10) eines Stabilisators nach einem der Ansprüche 1 bis 3 und einen Stützanker (20) eines Stabilisators nach einem der Ansprüche 4 bis 8.

10. Baugruppe (100) nach Anspruch 9, bei der das erste Teil (12) durch Einrasten mit dem ersten Element (22) zusammengefügt wird, wobei das zweite Teil (14) durch Zusammenfügen mit dem zweiten Element (24) zusammengefügt wird.

11. Stabilisatorträger (50), umfassend eine Elastomerfeder (10) nach einem der Ansprüche 1 bis 3 und eine Armatur (20) nach einem der Ansprüche 4 bis 8, bei dem das erste Teil (12) durch Einrasten an dem ersten Element (22) befestigt ist, während das zweite Teil (14) durch Einrasten an dem zweiten Element (24) befestigt ist, wobei das erste Element (22) an dem zweiten Element (24) befestigt ist.

12. Stabilisator (70), versehen mit einem Träger nach Anspruch 11.

13. Verfahren zur Bereitstellung von Stabilisatoren, umfassend die folgenden Schritte:
- Bereitstellen eines Stabilisators (70);
- Bereitstellen einer Baugruppe (100) nach Anspruch 9 oder 10;
- Anordnen des ersten Teils (12) und des zweiten Teils (14) um den Stabilisator (70) herum und Befestigen des ersten Elements (22) an dem zweiten Element (24), und
- Verbinden des ersten Teils (12) und des zweiten Teils (14) mit dem Stabilisator (70).

14. Verfahren zur Bereitstellung eines Stabilisators nach Anspruch 13, bei dem die Baugruppe eine Armatur (20) nach Anspruch 8 umfasst, bei der das mindestens eine teilbare Gestänge (29) vor dem Anbringen des ersten Elements (22) an das zweite Element (24) voneinander getrennt wird.

15. Verfahren zur Bereitstellung eines Stabilisators nach Anspruch 13 oder 14, bei dem ein Haftmittel (72) auf den Stabilisator (70) aufgetragen wird, bevor das erste Teil (12) und das zweite Teil (14) um den Stabilisator (70) herum angeordnet werden.

## Revendications

1. Ressort en élastomère (10) pour une barre antiroulis comprenant au moins une première partie (12) réalisée en élastomère et une seconde partie (14) réalisée en un élastomère distinct de la première partie (12),
**caractérisé en ce que** la première partie (12) et la seconde partie (14) comprennent chacune une portion de verrouillage (16) configurées pour fonctionner ensemble en verrouillant une armature de support pour barre antiroulis (20).

2. Ressort en élastomère (10) selon la revendication 1, dans lequel la première partie (12) et la seconde partie (14) présentent chacune un renforcement de raidissement interne (15).

3. Ressort en élastomère (10) selon la revendication 1 ou 2, dans lequel la première partie (12) et la seconde partie (14) sont interconnectées par au moins une tringlerie divisible.

4. Armature de support pour barre antiroulis (20) comprenant un premier élément (22) et un second élément (24) distinct du premier élément (22), le premier élément (22) et le second élément (24) étant configurés pour être assemblés ensemble,
**caractérisée en ce que** le premier élément (22) et le second élément (24) comprennent chacun au moins une portion de verrouillage (26) configurées pour fonctionner ensemble en verrouillant un ressort en élastomère (10) pour une barre antiroulis.

5. Armature (20) selon la revendication 4, dans laquelle le premier élément (22) et le second élément (24) sont configurés pour être assemblés par verrouillage.

6. Armature (20) selon la revendication 4 ou 5, dans laquelle le premier élément (22) forme une base configurée pour être attachée à un châssis de véhicule ou équivalent.

7. Armature (20) selon la revendication 6, dans laquelle le premier élément (22) présente au moins un trou de fixation (22B), le second élément (24) présentant au moins une portion formant un moyen de centrage (27) configuré pour être engagé dans ledit au moins un trou (22B).

8. Armature (20) selon l'une quelconque des revendications 4 à 7, dans lequel le premier élément (22) et le second élément (24) sont interconnectés par au moins une tringlerie divisible (29).

9. Assemblage (100) comprenant un ressort en élastomère (10) d'une barre antiroulis selon l'une quelconque des revendications 1 à 3, et une armature de support (20) d'une barre antiroulis selon l'une quelconque des revendications 4 à 8.

10. Assemblage (100) selon la revendication 9, dans lequel la première partie (12) est assemblée par verrouillage avec le premier élément (22) tandis que la seconde partie (14) est assemblée par verrouillage conjointement avec le second élément (24).

11. Support pour barre antiroulis (50) comprenant un ressort en élastomère (10) selon l'une quelconque des revendications 1 à 3 et une armature (20) selon l'une quelconque des revendications 4 à 8, dans lequel la première partie (12) est attachée par verrouillage au premier élément (22) tandis que la seconde partie (14) est attachée par verrouillage au second élément (24), le premier élément (22) étant attaché au second élément (24).

12. Barre antiroulis (70) équipée d'un support (50) selon la revendication 11.

13. Procédé de préparation pour barre antiroulis comprenant les étapes consistant à :
- fournir une barre antiroulis (70),
- fournir un assemblage (100) selon la revendication 9 ou 10,
- agencer la première partie (12) et la seconde partie (14) autour de la barre antiroulis (70) et attacher le premier élément (22) au second élément (24), et
- coller la première partie (12) et la seconde partie (14) à la barre antiroulis (70).

14. Procédé de préparation pour une barre antiroulis selon la revendication 13, dans lequel l'assemblage comprend une armature (20) selon la revendication 8, dans lequel ladite au moins une tringlerie divisible (29) est rompue avant d'attacher le premier élément (22) au second élément (24).

15. Procédé de préparation pour une barre antiroulis selon la revendication 13 ou 14, dans lequel un adhésif (72) est appliqué à la barre antiroulis (70) avant que la première partie (12) et la seconde partie (14) soient agencées autour de la barre antiroulis (70).
